# EUROPEAN PATENT APPLICATION

(11) **EP 4 145 614 A1**
(43) Date of publication of application: **08.03.2023**
(21) Application number: 21831832.7
(22) Date of filing: 30.06.2021
(51) Int. Cl.: H01M 50/449, H01M 50/446, H01M 50/46, H01M 50/403, H01M 10/052

(54) **SEPARATOR FOR LITHIUM SECONDARY BATTERY, MANUFACTURING METHOD THEREFOR, AND SEPARATOR MANUFACTURED BY SAME**

(30) Priority: 30.06.2020 KR 20200080604
(71) Applicant: LG Energy Solution, Ltd., Seoul 07335 (KR)
(72) Inventor: HAN, Da-Kyung, Daejeon 34122 (KR); JEONG, So-Mi, Daejeon 34122 (KR); KWON, Kyung-An, Daejeon 34122 (KR); KIM, Min-Ji, Daejeon 34122 (KR)
(74) Representative: Hoffmann Eitle
(86) International application number: PCT/KR2021/008297
(87) International publication number: WO 2022/005211

(57) **Abstract**

The present disclosure relates to a separator for a lithium secondary battery and a method for manufacturing the same. The separator for a lithium secondary battery includes: a porous polymer substrate; and a porous coating layer formed on at least one surface of the porous polymer substrate, and including inorganic particles, a fluorine-based binder polymer (A), and an ethylenic copolymer (B) having an ethylene monomer-derived repeating unit (a) and a vinyl acetate monomer-derived repeating unit (b). It is possible to provide a separator having improved adhesion (peel strength) between the porous coating layer and the porous polymer substrate and improved adhesion (Lami strength) to an electrode at the same time and a method for manufacturing the same by using an ethylenic copolymer having predetermined characteristics.

## Description

### TECHNICAL FIELD

The present disclosure relates to a method for manufacturing a separator applicable to an electrochemical device, such as a lithium secondary battery, and a separator obtained thereby.

The present application claims priority to Korean Patent Application No. 10-2020-0080604 filed on June 30, 2020 in the Republic of Korea, the disclosures of which are incorporated herein by reference.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PC and even to energy for electric vehicles. In this context, electrochemical devices have been most spotlighted. Among such electrochemical devices, development of rechargeable secondary batteries has been focused. More recently, active studies have been conducted about designing a novel electrode and battery in order to improve the capacity density and specific energy in developing such batteries.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte.

Although electrochemical devices, such as lithium secondary batteries, have been produced from many production companies, safety characteristics thereof show different signs. Evaluation and securement of safety of such electrochemical devices are very important. For example, a separator prevents a short-circuit between a positive electrode and a negative electrode and provides a channel for transporting lithium ions. Therefore, a separator is an important factor affecting the safety and output characteristics of a battery.

Such a separator frequently uses a porous polymer substrate. In addition, a separator provided with a porous coating layer, including inorganic particles and a binder polymer, on at least one surface of a porous polymer substrate has been used frequently in order to prevent the heat shrinkage of the porous polymer substrate and to increase the adhesion to an electrode.

Herein, when preparing slurry for forming the porous coating layer, a dispersing agent is introduced to disperse the inorganic particles. However, such a dispersing agent is problematic in that it causes a decrease in adhesion (peel strength) between the porous polymer substrate and the porous coating layer and an increase in heat shrinkage.

Under these circumstances, the present disclosure is directed to providing a separator which has improved adhesion (peel strength) between a porous polymer substrate and a porous coating layer and shows a reduced heat shrinkage despite the use of a dispersing agent.

### DISCLOSURE

### Technical Problem

The present disclosure is designed to solve the problems of the related art, and therefore the present disclosure is directed to providing a separator having improved adhesion (peel strength) between a porous polymer substrate and a porous coating layer, and a method for manufacturing the same.

The present disclosure is also directed to providing a separator having a reduced heat shrinkage, and a method for manufacturing the same.

In addition, the present disclosure is directed to providing a separator having improved adhesion (Lami strength) to an electrode, and a method for manufacturing the same.

### Technical Solution

In one aspect of the present disclosure, there is provided a separator according to any one of the following embodiments.

According to the first embodiment, there is provided a separator for a lithium secondary battery, including:
a porous polymer substrate; and
a porous coating layer formed on at least one surface of the porous polymer substrate, and including inorganic particles, a fluorine-based binder polymer (A), and an ethylenic copolymer (B) having an ethylene monomer-derived repeating unit (a) and a vinyl acetate monomer-derived repeating unit (b),
wherein the content of the ethylenic copolymer is 5 parts by weight or less based on 100 parts by weight of the porous coating layer, and
the ethylenic copolymer has a weight average molecular weight of 400,000 or less.

According to the second embodiment, there is provided the separator for a lithium secondary battery as defined in the first embodiment, wherein the content of the ethylene monomer-derived repeating unit (a) is 20 parts by weight or less based on 100 parts by weight the total weight of the ethylenic copolymer.

According to the third embodiment, there is provided the separator for a lithium secondary battery as defined in the first or the second embodiment, wherein the ethylenic copolymer has a weight average molecular weight of 100,000-400,000.

According to the fourth embodiment, there is provided the separator for a lithium secondary battery as defined in any one of the first to the third embodiments, wherein the ethylenic copolymer further includes a comonomer-derived repeating unit (c), the comonomer-derived repeating unit includes a repeating unit derived from an acrylate monomer, a carboxyl group-containing C1-C10 monomer, or two or more monomers of them, and the content of the ethylene monomer-derived repeating unit (a) is 13 parts by weight or less based on 100 parts by weight of the ethylenic copolymer.

According to the fifth embodiment, there is provided the separator for a lithium secondary battery as defined in the fourth embodiment, wherein the ethylenic copolymer has a weight average molecular weight of 350,000 or less.

According to the sixth embodiment, there is provided the separator for a lithium secondary battery as defined in any one of the first to the fifth embodiments, wherein the porous coating layer further includes a dispersing agent.

According to the seventh embodiment, there is provided the separator for a lithium secondary battery as defined in the sixth embodiment, wherein the dispersing agent includes a fatty acid compound, an alkyl ammonium-based compound, a titanate-based compound, a silane-based compound, a phenolic compound, or two or more of them.

According to the eighth embodiment, there is provided the separator for a lithium secondary battery as defined in any one of the first to the seventh embodiments, wherein the fluorine-based binder polymer includes polyvinylidene fluoride, polyvinylidene fluoride-co-hexafluoropropylene, polyvinylidene fluoride-co-trifluoroethylene, polyvinylidene fluoride-co-chlorotrifluoroethylene, polyvinylidene fluoride-co-tetrafluoroethylene, or two or more of them.

According to the ninth embodiment, there is provided the separator for a lithium secondary battery as defined in any one of the first to the eighth embodiments, wherein the fluorine-based binder polymer has a weight average molecular weight of 100,000-1,500,000.

According to the tenth embodiment, there is provided the separator for a lithium secondary battery as defined in any one of the first to the ninth embodiments, which shows an adhesion (peel strength) between the porous polymer substrate and the porous coating layer of 70 gf/15 mm or more, and an adhesion (Lami strength) between the separator and an electrode of 50 gf/25 mm or more.

In another aspect of the present disclosure, there is provided a method for manufacturing a separator for a lithium secondary battery according to any one of the following embodiments.

According to the eleventh embodiment, there is provided a method for manufacturing a separator for a lithium secondary battery, including the steps of:
introducing inorganic particles to a fluorine-based binder polymer (A) and an ethylenic copolymer (B) having an ethylene monomer-derived repeating unit (a) and a vinyl acetate monomer-derived repeating unit (b), dissolved in an organic solvent, and dispersing the inorganic particles therein to prepare slurry for forming a porous coating layer; and
applying the slurry for forming a porous coating layer onto at least one surface of a porous polymer substrate having a plurality of pores, followed by drying, to form a porous coating layer on at least one surface of the porous polymer substrate,
wherein the content of the ethylenic copolymer is 5 parts by weight or less based on 100 parts by weight of the porous coating layer, and
the ethylenic copolymer has a weight average molecular weight of 400,000 or less.

According to the twelfth embodiment, there is provided the method for manufacturing a separator for a lithium secondary battery as defined in the eleventh embodiment, wherein the content of the ethylene monomer-derived repeating unit (a) is 20 parts by weight or less based on 100 parts by weight the total weight of the ethylenic copolymer.

According to the thirteenth embodiment, there is provided the method for manufacturing a separator for a lithium secondary battery as defined in the eleventh or the twelfth embodiment, wherein the organic solvent is a ketone solvent.

According to the fourteenth embodiment, there is provided the method for manufacturing a separator for a lithium secondary battery as defined in the thirteenth embodiment, wherein the ketone solvent includes acetone, methyl ethyl ketone, methyl propyl ketone, methyl isobutyl ketone, ethyl propyl ketone, ethyl isobutyl ketone, or two or more of them.

According to the fifteenth embodiment, there is provided the method for manufacturing a separator for a lithium secondary battery as defined in any one of the eleventh to the fourteenth embodiments, wherein the drying step is carried out under a relative humidity of 30-80%.

According to the sixteenth embodiment, there is provided the method for manufacturing a separator as defined in any one of the eleventh to the fifteenth embodiments, wherein the weight ratio of the inorganic particles to the total weight of the fluorine-based binder polymer (A) and the ethylenic copolymer (B) is 50:50-90: 10.

In still another aspect of the present disclosure, there is provided a lithium secondary battery according to the following embodiment.

According to the seventeenth embodiment, there is provided a lithium secondary battery including a positive electrode, a negative electrode and a separator interposed between the positive electrode and the negative electrode, wherein the separator is the same as defined in any one of the first to the tenth embodiments.

### Advantageous Effects

According to an embodiment of the present disclosure, it is possible to provide a separator having improved adhesion (peel strength) between a porous coating layer and a porous polymer substrate and improved adhesion (Lami strength) to an electrode at the same time, and a method for manufacturing the same, by using an ethylenic copolymer having predetermined characteristics.

According to an embodiment of the present disclosure, it is also possible to provide a separator having an improved heat shrinkage and a method for manufacturing the same.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIG. 1 is a scanning electron microscopic (SEM) image of the separator according to Comparative Example 4.
FIG. 2 is a scanning electron microscopic (SEM) image of the separator according to Comparative Example 5.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression `a part includes an element' does not preclude the presence of any additional elements but means that the part may further include the other elements.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

In an electrochemical device, such as a lithium secondary battery, a separator generally uses a porous polymer substrate, and thus has a problem in that it shows a heat shrinking behavior. Therefore, a porous coating layer has been introduced in order to reduce the heat shrinkage of the separator.

The porous coating layer is formed by dispersing inorganic particles in a solvent and applying the resultant dispersion onto a porous polymer substrate, followed by drying. Herein, a dispersing agent is introduced to increase the dispersibility of the inorganic particles. The inventors of the present disclosure have found that the dispersing agents used conventionally in a dispersing agent-introducing step have a small weight average molecular weight (Mw) of about 5,000 or less and facilitate dispersion of the inorganic particles, but cause the problem of a decrease in adhesion (peel strength) between the porous polymer substrate and the porous coating layer or an increase in heat shrinkage.

To solve the above-mentioned problem, the present disclosure is directed to providing a separator having improved adhesion (peel strength) between a porous polymer substrate and a porous coating layer and a reduced heat shrinkage despite the use of a dispersing agent.

In one aspect of the present disclosure, there is provided a separator for a lithium secondary battery, including:
a porous polymer substrate; and
a porous coating layer formed on at least one surface of the porous polymer substrate, and including inorganic particles, a fluorine-based binder polymer (A), and an ethylenic copolymer (B) having an ethylene monomer-derived repeating unit (a) and a vinyl acetate monomer-derived repeating unit (b),
wherein the content of the ethylenic copolymer is 5 parts by weight or less based on 100 parts by weight of the porous coating layer, and
the ethylenic copolymer has a weight average molecular weight of 400,000 or less.

Hereinafter, the separator for a lithium secondary battery according to an embodiment of the present disclosure will be explained in more detail.

The separator for a lithium secondary battery according to an embodiment of the present disclosure includes a fluorine-based binder polymer (A) and an ethylenic copolymer (B) in the porous coating layer.

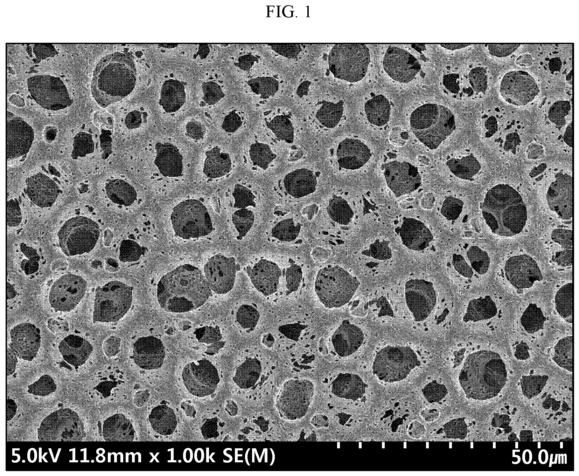

According to the related art, a porous coating layer is formed by using a fluorine-based binder polymer. Such a porous coating layer is formed by applying slurry onto a porous polymer substrate and drying the solvent under a humidified condition to form pores in the porous coating layer, while forming an adhesive layer on the surface portion of the porous coating layer. It seems that this is because the fluorine-based binder polymer is dissolved in the solvent. However, when the porous coating layer is formed by using the fluorine-based binder polymer alone, the fluorine-based binder polymer is positioned merely on the surface portion of the porous coating layer, as shown in FIG. 1. As a result, there is a problem in that the adhesion (peel strength) between the porous coating layer and the porous polymer substrate is decreased relatively.

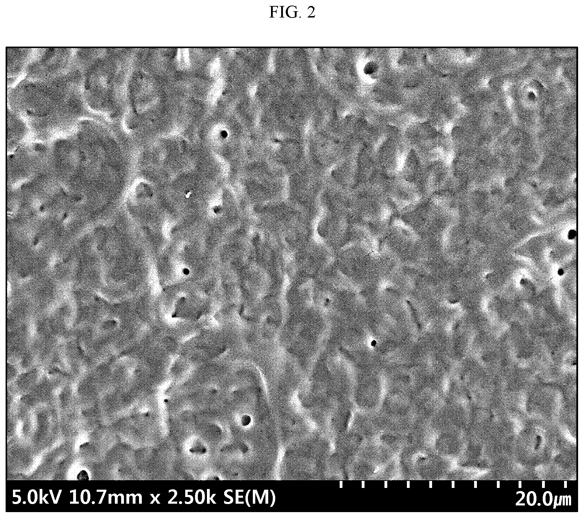

Meanwhile, the inventors of the present disclosure intend to increase the adhesion (peel strength) between the porous coating layer and the porous polymer substrate by adding an ethylenic copolymer (B). The inventors of the present disclosure have found that when a porous coating layer is formed by using an ethylenic copolymer (B) alone, the ethylenic copolymer does not undergo humidified phase separation but is coated on the surface of the porous polymer substrate in the form of a film. This can be seen from FIG. 2.

Under these circumstances, according to the present disclosure, the fluorine-based binder polymer and the ethylenic copolymer are used at the same time so that the porous coating layer may have a larger weight ratio (A/B) of the fluorine-based binder polymer/ethylenic copolymer toward the surface portion of the porous coating layer. In this manner, the inventors of the present disclosure intend to improve the adhesion (peel strength) between the porous coating layer and the porous polymer substrate and the adhesion (Lami strength) between the separator and an electrode at the same time.

The fluorine-based binder polymer (A) is a semi-crystalline polymer and undergoes phase separation under a humidified condition to form a porous structure. For this reason, when the fluorine-based binder polymer is applied onto the porous polymer substrate in combination with the inorganic particles, it is positioned predominantly on the surface of the porous coating layer rather than between the porous polymer substrate and the inorganic particles. When forming the porous coating layer, the fluorine-based binder polymer is positioned on the surface of the porous coating layer rather than between the substrate and the inorganic particles. In this manner, it is possible to improve the adhesion between an electrode and the separator.

The fluorine-based binder polymer has adhesive property and provides binding force between the porous polymer substrate and the porous coating layer, or binding force between the porous coating layer and the electrode. In addition, the fluorine-based binder polymer functions to fix the inorganic particles so that the inorganic particles in the porous coating layer may not be detached therefrom.

According to an embodiment of the present disclosure, the fluorine-based binder polymer may include polyvinylidene fluoride, polyvinylidene fluoride-co-hexafluoropropylene, polyvinylidene fluoride-co-trifluoroethylene, polyvinylidene fluoride-co-chlorotrifluoroethylene, polyvinylidene fluoride-co-tetrafluoroethylene, or two or more of them. For example, the fluorine-based binder polymer may include polyvinylidene fluoride-co-hexafluoropropylene and polyvinylidene fluoride-co-chlorotrifluoroethylene.

According to an embodiment of the present disclosure, the fluorine-based binder polymer may have a weight average molecular weight of 100,000 or more, 200,000 or more, or 300,000 or more, and 1,500,000 or less, 1,000,000 or less, or 800,000 or less. For example, the fluorine-based binder polymer may have a weight average molecular weight of 300,000-800,000 to ensure processability, while ensuring heat resistance and adhesive property.

Herein, the weight average molecular weight of the fluorine-based binder polymer may be determined by using gel permeation chromatography (GPC, PL GPC220, Agilent technologies).

Particularly, the weight average molecular weight may be determined under the following analysis conditions:
- Column: PL MiniMixed B x 2
- Solvent: DMF
- Flow rate: 0.3 mL/min
- Sample concentration: 2.0 mg/mL
- Injection amount: 10 µL
- Column temperature: 40°C
- Detector: Agilent RI detector
- Standard: Polystyrene (corrected with tertiary function)
- Data processing: ChemStation

The ethylenic copolymer (B) includes an ethylenic copolymer (B) having an ethylene monomer-derived repeating unit (a) and a vinyl acetate monomer-derived repeating unit (b).

Herein, the ethylenic copolymer functions as a dispersing agent with which the inorganic particles are dispersed. According to the present disclosure, the ethylenic copolymer is used also as a binder polymer which increases the adhesion (peel strength) between the porous polymer substrate and the porous coating layer.

Herein, the content of the ethylene monomer-derived repeating unit (a) is preferably 20 parts by weight or less based on 100 parts by weight of the total weight of the ethylenic copolymer. For example, the content of the ethylene monomer-derived repeating unit may be 20 parts by weight or less, 18 parts by weight or less, 16 parts by weight or less, 14 parts by weight or less, 12 parts by weight or less, or 10 parts by weight or less, or 1-20 parts by weight or 4-20 parts by weight. The separator according to an embodiment of the present disclosure uses the ethylenic copolymer after it is dissolved in an organic solvent. When the content of the ethylene monomer-derived repeating unit is 20 parts by weight or less, the ethylenic copolymer may be dissolved well in the organic solvent used according to an embodiment of the present disclosure, which is favorable to the formation of a porous coating layer.

According to an embodiment of the present disclosure, the content of the ethylenic copolymer is 5 parts by weight or less based on 100 parts by weight of the porous coating layer. Particularly, the content of the ethylenic copolymer is 4 parts by weight or less, 3 parts by weight or less, or 2 parts by weight or less, or 1-5 parts by weight or 1-3 parts by weight, based on 100 parts by weight of the porous coating layer. When the content of the ethylenic copolymer is larger than 5 parts by weight, it is not possible to ensure adhesion (Lami strength) to an electrode.

According to an embodiment of the present disclosure, the ethylenic copolymer has a weight average molecular weight of 400,000 or less. When the weight average molecular weight of the ethylenic copolymer is larger than 400,000, the dispersibility of the slurry for forming a porous coating layer applied to the substrate is low, and thus the slurry cannot be applied at all. Particularly, since the inorganic particles in the slurry have a large particle size and show a high sedimentation rate, it is not possible to carry out coating. According to an embodiment of the present disclosure, the ethylenic copolymer may have a weight average molecular weight of 400,000 or less, 350,000 or less, or 300,000 or less, and 50,000 or more, 100,000 or more, or 150,000 or more. For example, the weight average molecular weight may be 100,000-400,000, particularly 280,000-380,000 in order to ensure processability, while ensuring heat resistance and adhesive property.

Herein, the weight average molecular weight of the ethylenic copolymer may be determined by using gel permeation chromatography (GPC, PL GPC220, Agilent technologies).

Particularly, the weight average molecular weight may be determined under the following analysis conditions:
- Column: PL MiniMixed B x 2
- Solvent: DMF
- Flow rate: 0.3 mL/min
- Sample concentration: 2.0 mg/mL
- Injection amount: 10 µL
- Column temperature: 40°C
- Detector: Agilent RI detector
- Standard: Polystyrene (corrected with tertiary function)
- Data processing: ChemStation

According to an embodiment of the present disclosure, the ethylenic copolymer further includes a comonomer-derived repeating unit (c), and the comonomer-derived repeating unit may include an acrylate monomer, a carboxyl group-containing C1-C10 monomer, or two or more monomers of them. Herein, the content of the ethylene monomer-derived repeating unit (a) is preferably 13 parts by weight or less based on 100 parts by weight of the ethylenic copolymer. In addition, the ethylenic copolymer preferably has a weight average molecular weight of 350,000 or less. Within the above-defined range, the ethylenic copolymer may be dissolved in the solvent used according to the present disclosure, particularly an organic ketone solvent.

According to an embodiment of the present disclosure, the acrylate monomer may include at least one selected from the group consisting of vinyl acrylate, 2-butoxyethyl acrylate, 2-butoxyethyl methacrylate, 2-ethoxyethyl acrylate, 2-ethoxyethyl methacrylate, 2-ethyl-2-adamantyl acrylate, 2-ethyl-2-adamantyl methacrylate, 2-hydroxyethyl acrylate, 2-methyl-2-adamantyl acrylate, 2-methyl-2-adamantyl methacrylate, benzyl acrylate, cyclohexyl acrylate, di(ethylene glycol)ethyl ether acrylate, di(ethylene glycol)ethyl ether methacrylate, di(ethylene glycol)methyl ether methacrylate, dicyclopentanyl acrylate, epoxy acrylate, ethylene glycol methyl ether acrylate, ethylene glycol phenyl ether acrylate, hydroxypropyl acrylate, isobornyl acrylate, methyl adamantyl acrylate, neopentyl glycol benzoate acrylate, 2-hydroxyethyl methacrylate, adamantyl methacrylate, allyl methacrylate, benzyl methacrylate, cyclohexyl methacrylate, dicyclopentanyl methacrylate, epoxycyclohexylmethyl methacrylate, ethylene glycol phenyl ether methacrylate, hydroxybutyl methacrylate, hydroxypropyl methacrylate, isobornyl methacrylate, glycidyl methacrylate, methyl adamantyl methacrylate, methyl methacrylate, methyl glycidyl methacrylate, isobutyl acrylate, tert-butyl acrylate, lauryl acrylate, alkyl acrylate, 2-hydroxyacrylate, trimethoxybutyl acrylate, ethyl carbitol acrylate, 4-hydroxybutyl acrylate, 2-hydroxy-3-phenoxypropyl acrylate, 3-fluoroethyl acrylate, 4-fluoropropyl acrylate, and triethylsiloxylethyl acrylate.

According to an embodiment of the present disclosure, the carboxyl group-containing C1-C10 monomer may be a vinylic acid monomer.

According to an embodiment of the present disclosure, the carboxyl group-containing C1-C10 monomer may include vinylic acid, acrylic acid, methacrylic acid, itaconic acid, or two or more of them.

Meanwhile, in the separator according to an embodiment of the present disclosure, the porous coating layer may have a larger weight ratio (A/B) of the fluorine-based binder polymer/ethylenic copolymer toward the surface portion of the porous coating layer.

This is because the fluorine-based binder polymer is a crystalline polymer as compared to the ethylenic copolymer. The ethylenic copolymer used according to the present disclosure is an amorphous polymer. Therefore, when the ethylenic copolymer is applied onto the porous polymer substrate under a humidified condition, no phase separation occurs so that it may be positioned at the side of the porous polymer substrate as compared to the fluorine-based binder polymer.

According to an embodiment of the present disclosure, the porous coating layer may further include a dispersing agent. The dispersing agent is introduced to prevent aggregation of the solid content during the formation of the porous coating layer by dispersing the inorganic particles.

For example, the dispersing agent may be a fatty acid compound, an alkyl ammonium-based compound, a titanate-based compound, a silane-based compound, a phenolic compound, or two or more of them.

For example, the fatty acid compound may be any one selected from the group consisting of C10 or higher acids, such as palmitic acid, stearic acid and oleic acid, or a mixture of two or more of them.

For example, the alkyl ammonium-based compound may include a compound represented by the following Chemical Formula 1: 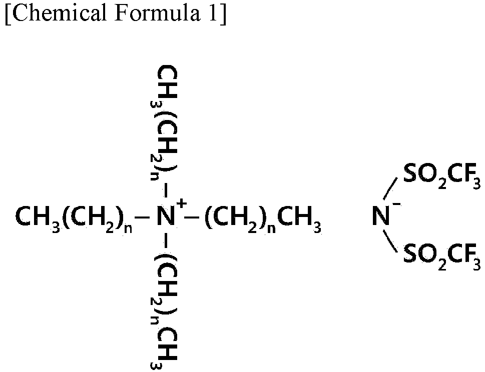 wherein n is an integer of 0-15.

For example, the titanate-based compound may be any one selected from the group consisting of monoalkoxy titanate, neoalkoxy titanate, isopropyl tridioctylphosphate titanate, isopropyl tridoctylpyrophosphate titanate, oleyl titanate, isopropyl trioleyl titanate, isopropyl tristearyl titanate and isopropyl triisostearyl titanate, or a mixture of two or more of them.

For example, the silane-based compound may be a silane-based compound containing two or more functional groups selected from the group consisting of vinyl, epoxy, amino, acryloxy, methacryloxy, methoxy, ethoxy, styryl, isocyanurate and isocyanate groups.

In this manner, the separator according to an embodiment of the present disclosure shows an adhesion (peel strength) between the porous polymer substrate and the porous coating layer of 70 gf/15 mm or more, and an adhesion (Lami strength) to an electrode of 50 gf/25 mm or more.

In another aspect of the present disclosure, there is provided a method for manufacturing a separator for a lithium secondary battery.

Particularly, the method for manufacturing a separator for a lithium secondary battery includes the steps of:
introducing inorganic particles to a fluorine-based binder polymer (A) and an ethylenic copolymer (B) having an ethylene monomer-derived repeating unit (a) and a vinyl acetate monomer-derived repeating unit (b), dissolved in an organic solvent, and dispersing the inorganic particles therein to prepare slurry for forming a porous coating layer; and
applying the slurry for forming a porous coating layer onto at least one surface of a porous polymer substrate having a plurality of pores, followed by drying, to form a porous coating layer on at least one surface of the porous polymer substrate,
wherein the content of the ethylenic copolymer is 5 parts by weight or less based on 100 parts by weight of the porous coating layer, and
the ethylenic copolymer has a weight average molecular weight of 400,000 or less.

First, inorganic particles are introduced to and dispersed in a fluorine-based binder polymer (A) and an ethylenic copolymer (B) having an ethylene monomer-derived repeating unit (a) and a vinyl acetate monomer-derived repeating unit (b), dissolved in an organic solvent, to prepare slurry for forming a porous coating layer (S1).

The fluorine-based binder polymer (A) and the ethylenic copolymer (B) are dissolved in the organic solvent. Reference will be made to the above description about the fluorine-based binder polymer (A) and the ethylenic copolymer (B).

The organic solvent may be a ketone solvent. For example, the solvent may include acetone, methyl ethyl ketone, methyl propyl ketone, methyl isobutyl ketone, ethyl propyl ketone, ethyl isobutyl ketone, or two or more of them.

According to the present disclosure, there is no particular limitation in the inorganic particles, as long as they are electrochemically stable. In other words, there is no particular limitation in the inorganic particles that may be used herein, as long as they cause no oxidation and/or reduction in the range (e.g. 0-5 V based on Li/Li⁺) of operating voltage of an applicable electrochemical device. Particularly, when using inorganic particles having a high dielectric constant, it is possible to improve the ion conductivity of an electrolyte by increasing the dissociation degree of an electrolyte salt, such as a lithium salt, in a liquid electrolyte.

For the above-mentioned reasons, the inorganic particles may be inorganic particles having a dielectric constant of 5 or more, inorganic particles having lithium-ion transportability or a combination thereof.

The inorganic particles having a dielectric constant of 5 or more may include any one selected from the group consisting of Al₂O₃, SiO₂, ZrO₂, AlO(OH), TiO₂, BaTiO₃, Pb(ZrₓTi₁₋ₓ)O₃ (PZT, wherein 0 < x < 1), Pb₁₋ₓLaₓZr_{1-y}Ti_{y}O₃ (PLZT, wherein 0 < x < 1, 0 < y < 1), (1-x)Pb(Mg_{1/2}Nb_{2/3})O₃₋ₓPbTiO₃ (PMN-PT, wherein 0 < x < 1), hafnia (HfO₂), SrTiO₃, SnO₂, CeO₂, MgO, NiO, CaO, ZnO, ZO₃ and SiC, or a mixture of two or more of them.

The inorganic particles having lithium-ion transportability may be any one selected from the group consisting of include lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (1 < x < 4, 0 < y < 13), lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x < 4, 0 < y < 2), SiS₂-based glass (LiₓSi_{y}S_{z}, 0 < x < 3, 0 < y < 2, 0 < z < 4) and P₂S₅-based glass (LiₓP_{y}S_{z}, 0 < x < 3, 0 < y < 3, 0 < z < 7), or a mixture of two or more of them.

In addition, there is no particular limitation in the average particle diameter of the inorganic particles. However, the inorganic particles preferably have an average particle diameter of 0.001-10 µm in order to form a porous coating layer with a uniform thickness and to provide suitable porosity. The average particle diameter of the inorganic particles may be preferably 100 nm to 2 µm, more preferably 150 nm to 1 µm.

The inorganic particles may be added after they are pulverized in advance to a predetermined average particle diameter. Otherwise, the inorganic particles may be added to a binder polymer solution, and then pulverized and dispersed, while controlling them to have a predetermined diameter by using a ball milling process, or the like.

The weight ratio of the inorganic particles to the total content of the binder polymer may be 90: 10-50:50. When the weight ratio of the inorganic particles to the total content of the binder polymer satisfies the above-defined range, it is possible to prevent the problem of a decrease in pore size and porosity of the resultant porous coating layer, caused by an increase in content of the binder polymer. It is also possible to solve the problem of degradation of peeling resistance of the resultant porous coating layer, caused by a decrease in content of the binder polymer.

The inorganic particles may be dispersed by using a method generally known to the those skilled in the art. For example, an ultrasonic disperser, a ball mill, a bead mill, a disperser, a mixer, or the like, may be used, and particularly, a ball mill or a bead mill is used preferably. Herein, the dispersion treatment time may vary depending on the volume to be treated, but may be suitably 1-20 hours. The particle size of the pulverized particles may be controlled depending on the size of beads used in the ball mill or bead mill, or the ball milling (or bead milling) time.

Then, the slurry for forming a porous coating layer is applied onto a porous polymer substrate having a plurality of pores, followed by drying, to obtain a separator provided with a porous coating layer on the porous polymer substrate (S2).

According to the present disclosure, the porous polymer substrate is a porous membrane and can provide a channel for transporting lithium ions, while insulating the anode and cathode electrically from each other to prevent a short-circuit. Any material may be used with no particular limitation, as long as it may be used conventionally as a material for a separator of an electrochemical device.

Particularly, the porous polymer substrate may be a porous polymer film substrate or a porous polymer nonwoven web substrate.

The porous polymer film substrate may be a porous polymer film including polyolefin, such as polyethylene or polypropylene. Such a polyolefin porous polymer film substrate realizes a shut-down function at a temperature of 80-150°C.

Herein, the polyolefin porous polymer film may be formed of polymers including polyolefin polymers, such as polyethylene, including high-density polyethylene, linear low-density polyethylene, low-density polyethylene or ultrahigh-molecular weight polyethylene, polypropylene, polybutylene, or polypentene, alone or in combination of two or more of them.

In addition, the porous polymer film substrate may be obtained by molding various polymers, such as polyesters, other than polyolefins, into a film shape. Further, the porous polymer film substrate may have a stacked structure of two or more film layers, wherein each film layer may be formed of polymers including the above-mentioned polymers, such as polyolefins or polyesters, alone or in combination of two or more of them.

In addition, the porous polymer film substrate and porous nonwoven web substrate may be formed of polyethylene terephthalate, polybutylene terephthalate, polyester, polyacetal, polyamide, polycarbonate, polyimide, polyetherether ketone, polyether sulfone, polyphenylene oxide, polyphenylene sulfide, or polyethylene naphthalene, alone or in combination, besides the above-mentioned polyolefins.

Although the thickness of the porous polymer substrate is not particularly limited, it may be 1-100 µm, particularly 5-50 µm. As the batteries have been provided with high output/high capacity recently, it is advantageous to use a thin film as a porous polymer substrate. The pores present in the porous polymer substrate may have a dimeter of 10-100 nm, 10-70 nm, 10-50 nm, or 10-35 nm, and a porosity of 5-90%, preferably 20-80%. However, according to the present disclosure, such numerical ranges may be changed with ease according to a particular embodiment, or as necessary.

The pores of the porous polymer substrate may include several types of pore structures. When any one of the pore size determined by using a porosimeter and the average pore size observed through field emission-scanning electron microscopy (FE-SEM) satisfies the above-defined range, it falls within the scope of the present disclosure.

Herein, in the case of a generally known monoaxially oriented dry separator, the median pore size in the pore size of the transverse direction (TD), not the pore size of the machine direction (MD), determined through FE-SEM is taken as the standard pore size. In the case of the other porous polymer substrates (e.g. wet polyethylene (PE) separator) having a network structure, the pore size measured by using a porosimeter is taken as the standard pore size.

Although the thickness of the porous coating layer is not particularly limited, it may be 1-10 µm, particularly 1.5-8 µm. In addition, the porosity of the porous coating layer is not particularly limited, but it may be 35-65%, preferably.

The separator according to an embodiment of the present disclosure may further include other additives as ingredients of the porous coating layer, besides the above-described inorganic particles and binder polymer.

Although there is no particular limitation in the process for coating the slurry for forming a porous coating layer onto the porous polymer substrate, it is preferred to use a slot coating or dip coating process. A slot coating process includes coating a composition supplied through a slot die onto the whole surface of a substrate and is capable of controlling the thickness of a coating layer depending on the flux supplied from a metering pump. In addition, a dip coating process includes dipping a substrate into a tank containing a composition to carry out coating and is capable of controlling the thickness of a coating layer depending on the concentration of the composition and the rate of removing the substrate from the tank. Further, in order to control the coating thickness more precisely, it is possible to carry out post-metering through a Mayer bar or the like, after dipping.

Then, the porous polymer substrate coated with the slurry for forming a porous coating layer may be dried in a dryer, such as an oven, to form a porous coating layer on at least one surface of the porous polymer substrate.

In the porous coating layer, the inorganic particles are bound to one another by the binder polymer, while they are packed and are in contact with each other, thereby forming interstitial volumes among the inorganic particles, and the interstitial volumes among the inorganic particles become vacant spaces to form pores.

In other words, the binder polymer attaches the inorganic particles to one another so that they may retain their binding states. For example, the binder polymer connects the inorganic particles with one another and fixes them. In addition, the pores of the porous coating layer are those formed by the interstitial volumes among the inorganic particles which become vacant spaces. The spaces may be defined by the inorganic particles facing each other substantially in a closely packed or densely packed structure of the inorganic particles.

The drying may be carried out in a drying chamber, wherein the condition of the drying chamber is not particularly limited due to the application of a non-solvent.

However, since the separator is dried under a humidified condition according to an embodiment of the present disclosure, the fluorine-based binder polymer may be distributed predominantly on the surface of the porous coating layer. The drying step may be carried out under a relative humidity of 30% or more, 35% or more, or 40% or more, and 80% or less, 75% or less, or 70% or less. For example, the drying step may be carried out under a relative humidity of 40-80%. In addition, the drying step may be carried out at a temperature of 20-70°C for 0.1-2 minutes.

In still another aspect of the present disclosure, there is provided an electrochemical device including a positive electrode, a negative electrode and a separator interposed between the positive electrode and the negative electrode, wherein the separator is the above-described separator according to an embodiment of the present disclosure.

The electrochemical device includes any device which carries out electrochemical reaction, and particular examples thereof include all types of primary batteries, secondary batteries, fuel cells, solar cells or capacitors, such as super capacitor devices. Particularly, among the secondary batteries, lithium secondary batteries, including lithium metal secondary batteries, lithium-ion secondary batteries, lithium polymer secondary batteries or lithium-ion polymer batteries, are preferred.

The two electrodes, positive electrode and negative electrode, used in combination with the separator according to the present disclosure are not particularly limited, and may be obtained by allowing electrode active materials to be bound to an electrode current collector through a method generally known in the art. Among the electrode active materials, non-limiting examples of a positive electrode active material include conventional positive electrode active materials that may be used for the positive electrodes for conventional electrochemical devices. Particularly, lithium manganese oxides, lithium cobalt oxides, lithium nickel oxides, lithium iron oxides or lithium composite oxides containing a combination thereof are used preferably. Non-limiting examples of a negative electrode active material include conventional negative electrode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, are used preferably. Non-limiting examples of a positive electrode current collector include foil made of aluminum, nickel or a combination thereof. Non-limiting examples of a negative electrode current collector include foil made of copper, gold, nickel, copper alloys or a combination thereof.

The electrolyte that may be used in the electrochemical device according to the present disclosure is a salt having a structure of A⁺B⁻, wherein A⁺ includes an alkali metal cation such as Li⁺, Na⁺, K⁺ or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Comparative Example 1

First, polyvinylidene fluoride-co-hexafluoropropylene (PVDF-HFP) having a weight average molecular weight of about 400,000 and polyvinylidene fluoride-co-chlorotrifluooethylene (PVDF-CTFE) having a weight average molecular weight of about 400,000, as fluorine-based binder polymers, were introduced to acetone as a solvent and dissolved therein at 50°C for about 4 hours to prepare a binder polymer solution. Next, aluminum hydroxide (Al(OH)₃) (particle size: 900 nm) as inorganic particles was introduced to the binder polymer solution. Then, liquid fatty acid (BYK Co., P104) as a dispersing agent was introduced thereto. Herein, the weight ratio of the inorganic particles : fluorine-based binder polymers : dispersing agent was controlled to 75 : 23 : 2 to prepare slurry for forming a porous coating layer. Particularly, the weight ratio of the inorganic particles : fluoride-co-hexafluoropropylene (PVDF-HFP) : polyvinylidene fluoride-co-chlorotrifluooethylene (PVDF-CTFE) : dispersing agent was controlled to 75 : 18 : 5 : 2. Herein, the solid content (slurry free from the solvent) was 15 parts by weight based on 100 parts by weight of the slurry.

The slurry for forming a porous coating layer was applied to both surfaces of a polyethylene porous film (porosity: 45%) having a thickness of 9 µm through a dip coating process at 23°C under a relative humidity of 45%, followed by drying, to obtain a separator having porous coating layers each having a thickness of 6 µm. The test results are shown in the following Table 1.

### Comparative Example 2

A separator was obtained in the same manner as Comparative Example 1, except that a silane-based compound (BYK Co., C8002) was introduced as a dispersing agent instead of the liquid fatty acid (BYK Co., P104). The test results are shown in Table 1.

### Example 1

First, polyvinylidene fluoride-co-hexafluoropropylene (PVDF-HFP) having a weight average molecular weight of about 400,000 and polyvinylidene fluoride-co-chlorotrifluooethylene (PVDF-CTFE) having a weight average molecular weight of about 400,000, as fluorine-based binder polymers (A), were introduced to acetone as a solvent and dissolved therein at 50°C for about 4 hours to prepare a binder polymer solution. Next, aluminum hydroxide (Al(OH)₃) (particle size: 900 nm) as inorganic particles was introduced to the binder polymer solution. Then, an ethylenic copolymer (B) (content of ethylene monomer-derived repeating unit: 6 parts by weight based on 100 parts by weight of ethylenic copolymer, weight average molecular weight: 280,000) and liquid fatty acid (BYK Co., P104) as a dispersing agent were introduced thereto. Herein, the weight ratio of the inorganic particles : fluorine-based binder polymers : ethylenic copolymer : dispersing agent was controlled to 75 : 23 : 1 : 1 to prepare slurry for forming a porous coating layer. Particularly, the weight ratio of the inorganic particles : fluoride-co-hexafluoropropylene (PVDF-HFP) : polyvinylidene fluoride-co-chlorotrifluooethylene (PVDF-CTFE) : ethylenic copolymer : dispersing agent was controlled to 75 : 18 : 5 : 1 : 1. Herein, the solid content (slurry free from the solvent) was 15 parts by weight based on 100 parts by weight of the slurry.

The slurry for forming a porous coating layer was applied to both surfaces of a polyethylene porous film (porosity: 45%) having a thickness of 9 µm through a dip coating process at 23°C under a relative humidity of 45%, followed by drying, to obtain a separator having porous coating layers each having a thickness of 6 µm. The test results are shown in the following Table 1.

### Example 2

A separator was obtained in the same manner as Example 1, except that a silane-based compound (BYK Co., C8002) was introduced as a dispersing agent instead of the liquid fatty acid (BYK Co., P104). The test results are shown in Table 1.

### Example 3

A separator was obtained in the same manner as Example 1, except that only the ethylenic copolymer (B) was used instead of the ethylenic copolymer (B) and the liquid fatty acid (BYK Co., P104). The test results are shown in Table 1.

**[Table 1]**

| | | Comp. Ex. 1 | Comp. Ex. 2 | Ex.1 | Ex. 2 | Ex. 3 |
|---|---|---|---|---|---|---|
| Content of dispersing agent (based on 100 parts by weight of porous coating layer) (parts by weight) | Fatty acid | 2 | - | 1 | - | - |
| | Silane-based coupling agent | - | 2 | - | 1 | - |
| Ethylene-vinyl acetate copolymer | | - | - | 1 | 1 | 2 |
| Physical properties of separator | Peel Strength (gf/15 mm) | 25 | 37 | 87 | 95 | 118 |
| | Heat shrinkage (150°C, 30 min.) (MD/TD) | 48/46 | 43/42 | 37/36 | 34/32 | 15/12 |

### Examples 4 and 5

A separator was obtained in the same manner as Example 3, except that the content of the ethylenic copolymer (B) was controlled as shown in the following Table 2. The test results are shown in Table 2.

### Comparative Examples 3

A separator was obtained in the same manner as Example 3, except that the content of the ethylenic copolymer (B) was controlled as shown in the following Table 2. The test results are shown in Table 2.

**[Table 2]**

| | | Ex. 3 | Ex. 4 | Ex. 5 | Comp. Ex. 3 |
|---|---|---|---|---|---|
| Composition (parts by weight) | Inorganic particles | 75 | 74 | 72 | 70 |
| | Fluorine-based binder polymer (A) | 23 | 23 | 23 | 23 |
| | Ethylenic copolymer (B) | 2 | 3 | 5 | 7 |
| Physical properties of separator | Adhesion (Lami Strength) to electrode (gf/25 mm, 60°C, 6.5 MPa) | 109 | 97 | 77 | 29 |

### Comparative Example 4

First, polyvinylidene fluoride-co-hexafluoropropylene (PVDF-HFP) having a weight average molecular weight of about 400,000 as a fluorine-based binder polymer (A) was introduced to acetone as a solvent and dissolved therein at 50°C for about 4 hours to prepare a binder polymer solution having a solid content of 5 parts by weight. Herein, the solid content in the binder polymer solution was calculated according to the formula of [(Fluorine-based binder polymer) / (Fluorine-based binder polymer + Solvent)] X 100.

The binder polymer solution was applied to both surfaces of a polyethylene porous film (porosity: 45%) having a thickness of 9 µm through a dip coating process at 23°C under a relative humidity of 45%, followed by drying, to obtain a separator having porous coating layers each having a thickness of 2 µm. The test results are shown in FIG. 1.

### Comparative Example 5

First, an ethylenic copolymer (B) was introduced to acetone as a solvent and dissolved therein at 50°C for about 4 hours to prepare a binder polymer solution having a solid content of 5 parts by weight. Herein, the solid content in the binder polymer solution was calculated according to the formula of [(Ethylenic copolymer) / (Ethylenic copolymer + Solvent)] X 100.

The binder polymer solution was applied to both surfaces of a polyethylene porous film (porosity: 45%) having a thickness of 9 µm through a dip coating process at 23°C under a relative humidity of 45%, followed by drying, to obtain a separator having porous coating layers each having a thickness of 2 µm. The test results are shown in FIG. 2.

### Examples 6 and 7

A separator was obtained in the same manner as Example 3, except that the content of the ethylenic copolymer (B) was controlled as shown in the following Table 3. The test results are shown in Table 3.

### Comparative Examples 6

A separator was obtained in the same manner as Example 3, except that the content of the ethylenic copolymer (B) was controlled as shown in the following Table 3.

The test results are shown in Table 3.

**[Table 3]**

| | | Ex. 3 | Ex. 6 | Ex. 7 | Comp. Ex. 6 |
|---|---|---|---|---|---|
| Composition (parts by weight) | Inorganic particles | 75 | 75 | 75 | 75 |
| | Fluorine-based binder polymer (A) | 23 | 23 | 23 | 23 |
| | Ethylenic copolymer (B) | 2 | 2 | 2 | 2 |
| Content of ethylene monomer-derived repeating unit (a) based on 100 parts by weight of ethylenic copolymer (B) | | 6 | 6 | 6 | 6 |
| Weight average molecular weight of ethylenic copolymer (B) | | 280,000 | 340,000 | 380,000 | 410,000 |
| Dispersibility of slurry for forming porous coating layer | Particle size of inorganic particles (D50, µm) | 1.8 | 2.0 | 2.1 | 3.5 |
| | Slurry sedimentation rate (µm /s) | 11.4 | 13.7 | 15.2 | 133 |

### Test Methods

### 1) Method for Determining Thickness

The thickness of each separator was determined by using a thickness gauge (Mitutoyo Co., VL-50S-B).

### 2) Method for Determining Heat Shrinkage

The heat shrinkage of each separator was calculated by measuring a change in length in the machine direction (MD) and the transverse direction (TD) and using the formula of [(Initial length - Length after heat shrinking at 150°C for 30 minutes) / (Initial length)] X 100.

### 3) Determination of Adhesion (Peel Strength) between Porous Polymer Substrate and Porous Coating Layer

Each of the separators according to Examples and Comparative Examples was cut into a size of 15 mm X 100 mm. A double-sided adhesive tape was attached to a glass plate, and the porous coating layer surface of the separator was attached to the adhesive tape. Then, the end portion of the separator was mounted to a UTM instrument (LLOYD Instrument LF Plus), and force was applied at 180° and a rate of 300 mm/min. The force required for separating the porous coating layer from the porous polymer substrate was measured.

### 4) Determination of Adhesion (Lami Strength) between Electrode and Separator

To determine the adhesion (Lami strength) between an electrode and each separator, an anode was prepared as follows.

First, artificial graphite, carbon black, carboxymethyl cellulose (CMC) and styrene-butadiene rubber (SBR) were mixed with water at a weight ratio of 96 : 1 : 1 : 2 to obtain anode slurry. The anode slurry was coated on copper (Cu) foil at a capacity of 3.5 mAh/cm² to form a thin electrode plate, which, in turn, was dried at 135°C for 3 hours or more and then pressed to obtain an anode.

The obtained anode was cut into a size of 25 mm x 100 mm. Each of the separators according to Examples and Comparative Examples was cut into a size of 25 mm x 100 mm. The separator was stacked with the anode, and the stack was inserted between PET films having a thickness of 100 µm and adhered by using a flat press. Herein, the flat press was heated and pressurized at 60°C under a pressure of 6.5 MPa for 1 second. The adhered separator and anode were attached to slide glass by using a double-sided tape. The end portion (10 mm or less from the end of the adhered surface) of the separator was peeled off and attached to a 25 mm x 100 mm PET film by using a single-sided tape so that they might be connected in the longitudinal direction. Then, the slide glass was mounted to the lower holder of a UTM instrument (LLOYD Instrument LF Plus), and the PET film adhered to the separator was mounted to the lower holder of the UTM instrument. Then, force was applied at 180° and a rate of 300 mm/min. The force required for separating the anode from the porous coating layer facing the anode was measured.

### 5) Average Particle Diameter (D50) of Inorganic Particles Contained in Slurry

The average particle diameter of the inorganic particles contained in slurry was determined by using a particle size analyzer (product name: MASTERSIZER 3000, available from Malvern).

### 6) Sedimentation Rate of Slurry for Forming Porous Coating Layer (µm /s)

The sedimentation rate of slurry for forming a porous coating layer was determined by introducing the slurry to a dispersion analyzer (product name: Lumisizer, available from LUM), applying centrifugal force thereto, while carrying out rotation at a rate of 1,000 rpm, and measuring the sedimentation rate depending on time.

### 7) Method for Determining Weight Average Molecular Weight

The weight average molecular weight of the ethylenic copolymer and that of the fluorine-based binder polymer used according to each of Examples and Comparative Examples were determined through gel permeation chromatography (GPC, PL GPC220, Agilent Technologies) under the following conditions:
- Column: PL MiniMixed B x 2
- Solvent: DMF
- Flow rate: 0.3 mL/min
- Sample concentration: 2.0 mg/mL
- Injection amount: 10 µL
- Column temperature: 40°C
- Detector: Agilent RI detector
- Standard: Polystyrene (corrected with tertiary function)
- Data processing: ChemStation

As can be seen from Table 1, in the case of Comparative Examples 1 and 2 using no ethylenic copolymer, the adhesion (peel strength) between the porous coating layer and the porous coating layer is significantly low as compared to Examples, and the heat shrinkage is also poor.

As can be seen from Table 2, when the content of the ethylene monomer-derived repeating unit contained in the ethylenic copolymer is 7 parts by weight, the adhesion (Lami strength) between the separator and the anode is significantly low as compared to Examples.

As can be seen from Table 3, when the weight average molecular weight of the ethylenic copolymer is larger than 400,000, the slurry shows low dispersibility, thereby making it difficult to form a porous coating layer.

On the contrary, as can be seen from Examples 1-7 according to the present disclosure, it is possible to provide a separator having improved adhesion (peel strength) between the porous coating layer and the porous polymer substrate and improved adhesion (Lami strength) to the electrode at the same time and a method for manufacturing the same by using an ethylenic copolymer having predetermined characteristics.

## Claims

1. A separator for a lithium secondary battery, comprising:
a porous polymer substrate; and
a porous coating layer formed on at least one surface of the porous polymer substrate, and comprising inorganic particles, a fluorine-based binder polymer (A), and an ethylenic copolymer (B) having an ethylene monomer-derived repeating unit (a) and a vinyl acetate monomer-derived repeating unit (b),
wherein the content of the ethylenic copolymer is 5 parts by weight or less based on 100 parts by weight of the porous coating layer, and
the ethylenic copolymer has a weight average molecular weight of 400,000 or less.

2. The separator for a lithium secondary battery according to claim 1, wherein the content of the ethylene monomer-derived repeating unit (a) is 20 parts by weight or less based on 100 parts by weight the total weight of the ethylenic copolymer.

3. The separator for a lithium secondary battery according to claim 1, wherein the ethylenic copolymer has a weight average molecular weight of 100,000-400,000.

4. The separator for a lithium secondary battery according to claim 1, wherein the ethylenic copolymer further comprises a comonomer-derived repeating unit (c), the comonomer-derived repeating unit comprises a repeating unit derived from an acrylate monomer, a carboxyl group-containing C1-C10 monomer, or two or more monomers of them, and the content of the ethylene monomer-derived repeating unit (a) is 13 parts by weight or less based on 100 parts by weight of the ethylenic copolymer.

5. The separator for a lithium secondary battery according to claim 4, wherein the ethylenic copolymer has a weight average molecular weight of 350,000 or less.

6. The separator for a lithium secondary battery according to claim 1, wherein the porous coating layer further comprises a dispersing agent.

7. The separator for a lithium secondary battery according to claim 6, wherein the dispersing agent includes a fatty acid compound, an alkyl ammonium-based compound, a titanate-based compound, a silane-based compound, a phenolic compound, or two or more of them.

8. The separator for a lithium secondary battery according to claim 1, wherein the fluorine-based binder polymer includes polyvinylidene fluoride, polyvinylidene fluoride-co-hexafluoropropylene, polyvinylidene fluoride-co-trifluoroethylene, polyvinylidene fluoride-co-chlorotrifluoroethylene, polyvinylidene fluoride-co-tetrafluoroethylene, or two or more of them.

9. The separator for a lithium secondary battery according to claim 1, wherein the fluorine-based binder polymer has a weight average molecular weight of 100,000-1,500,000.

10. The separator for a lithium secondary battery according to claim 1, which shows an adhesion (peel strength) between the porous polymer substrate and the porous coating layer of 70 gf/15 mm or more, and an adhesion (Lami strength) between the separator and an electrode of 50 gf/25 mm or more.

11. A method for manufacturing a separator for a lithium secondary battery, comprising the steps of:
introducing inorganic particles to a fluorine-based binder polymer (A) and an ethylenic copolymer (B) having an ethylene monomer-derived repeating unit (a) and a vinyl acetate monomer-derived repeating unit (b), dissolved in an organic solvent, and dispersing the inorganic particles therein to prepare slurry for forming a porous coating layer; and
applying the slurry for forming a porous coating layer onto at least one surface of a porous polymer substrate having a plurality of pores, followed by drying, to form a porous coating layer on at least one surface of the porous polymer substrate,
wherein the content of the ethylenic copolymer is 5 parts by weight or less based on 100 parts by weight of the porous coating layer, and
the ethylenic copolymer has a weight average molecular weight of 400,000 or less.

12. The method for manufacturing a separator for a lithium secondary battery according to claim 11, wherein the content of the ethylene monomer-derived repeating unit (a) is 20 parts by weight or less based on 100 parts by weight the total weight of the ethylenic copolymer.

13. The method for manufacturing a separator for a lithium secondary battery according to claim 11, wherein the organic solvent is a ketone solvent.

14. The method for manufacturing a separator for a lithium secondary battery according to claim 13, wherein the ketone solvent comprises acetone, methyl ethyl ketone, methyl propyl ketone, methyl isobutyl ketone, ethyl propyl ketone, ethyl isobutyl ketone, or two or more of them.

15. The method for manufacturing a separator for a lithium secondary battery according to claim 11, wherein the drying step is carried out under a relative humidity of 30-80%.

16. The method for manufacturing a separator for a lithium secondary battery according to claim 11, wherein the weight ratio of the inorganic particles to the total weight of the fluorine-based binder polymer (A) and the ethylenic copolymer (B) is 50:50-90:10.

17. A lithium secondary battery comprising a positive electrode, a negative electrode and a separator interposed between the positive electrode and the negative electrode, wherein the separator is the same as defined in any one of claims 1 to 10.
